# FASCICULE DE BREVET EUROPEEN

(11) **EP 2 240 008 B1**
(45) Date de publication et mention de la délivrance du brevet: **12.08.2015**
(21) Numéro de dépôt: 08856136.0
(22) Date de dépôt: 28.11.2008
(51) Int. Cl.: A01G 1/00

(54) **PROCÉDÉ DE CULTURE ET DE RÉCOLTE DE ZOYSIA TENUIFOLIA ET PRODUITS OBTENUS**
VERFAHREN ZUR ANZUCHT UND ERNTE VON ZOYSIA TENUIFOLIA, SOWIE DAS DADURCH ERHALTENE PRODUKT
METHOD FOR CULTIVATING AND HARVESTING ZOYSIA TENUIFOLIA AND PRODUCTS OBTAINED

(30) Priorité: 06.12.2007 FR 0708506
(43) Date de publication de la demande: 20.10.2010
(73) Titulaire: Monaco Euro Mediterranee, 98000 Monaco (MC)
(72) Inventeur: TOURNIER, Alain, 13100 Aix en Provence (FR)
(74) Mandataire: Hautier IP
(86) Numéro de dépôt international: PCT/FR2008/001654
(87) Numéro de publication internationale: WO 2009/071777

(56) Documents cités:
- AU-B2- 650 566
- FR-A- 2 867 017
- US-A1- 2003 230 027

## Description

### DOMAINE TECHNIQUE

La présente invention est relative à un procédé de culture de Zoysia tenuifolia ainsi qu'aux plants de Zoysia tenuifolia ainsi obtenus.

### ETAT DE LA TECHNIQUE

La présente invention concerne un procédé - ou méthode - de culture permettant l'obtention de rouleaux, plaques, ou tapis de Zoysia tenuifolia susceptibles d'être installés dans tout type de jardins ou d'espaces d'agrément, de loisirs, ou de sport.

Zoysia tenuifolia Willd.ex Trin est une graminée (Poacéeae) d'origine subtropicale, souvent dénommée Mascarenegrass, Korean velvetgrass, ou encore gazon des Mascareignes.

Zoysia ténuifolia ne produit que très rarement des graines ou des semences qui de surcroît, ont un très faible pouvoir germinatif.

Le mode traditionnel de multiplication dans la culture de cette plante, s'effectue donc par voie végétative. Des tiges, stolons, rhizomes, bourgeons, ou méristèmes sont fractionnés et mis en culture in vivo ou in vitro pour permettre l'obtention de nouveaux plants. Les plants ainsi obtenus peuvent être commercialisés en plants in vitro, en mini-mottes, en mottes, en blocs, en godets, ou en conteneurs, sous l'aspect de plants, de touffes, de mottes ou de plantes vivaces.

Cette technique traditionnelle de bouturage ne permet cependant pas d'obtenir facilement des plaques de ce gazon commercialisables.

Les brevets AU650566 et US2003230027 décrivent des procédés de culture de gazon sous forme de plaques ou rouleaux.

Le brevet AU650566 décrit une plaque laminée comportant un film de paillage photolytique ou « biolytic » comportant un grand nombre de trous ou de fentes, une couche poreuse photolytique ou « biolytic » pour la rétention d'humidité, et des stolons d'herbe démêlés.

Le brevet US2003230027 décrit un gazon transportable sur un site de transplantation, le gazon comportant une barrière imperméable aux racines et un médium de culture hors sol comportant d'environ 60% en masse à environ 100% en masse de sable dont les grains ont une taille allant d'environ 0.05 millimètre à environ 1 millimètre, la taille des grains de sable correspondant sensiblement à celle des grains de sable du site de transplantation ; d'environ 40% en masse à environ 0% en masse d'amendement organique ; et une quantité efficace d'engrais.

Cependant, ces techniques ne s'appliquent pas à Zoysia ténuifolia et ne permettent pas d'obtenir successivement plusieurs couches ou plaques de gazon transportables à partir de la culture.

Il a été proposé, dans le brevet FR2867017, de cultiver Zoysia ténuifolia en pleine terre, dans un sol sablo limoneux, limono sableux, sableux, ou argilo sableux. Le site de culture doit être préalablement nettoyé en surface et en profondeur pour éliminer pierres, racines, déchets, parasites, et les mauvaises herbes adventices et parasites des cultures.

La culture de Zoysia ténuifolia nécessite l'usage de fertilisants et amendements, par apports d'azote (N), de phosphore (P), et de potassium (K) notamment, dans des proportions variant en fonctions des propriétés du sol.

Un inconvénient de ce procédé est qu'au maximum trois récoltes (par déplacage) tous les deux ans peuvent s'effectuer sur la même parcelle.

L'apport de fertilisants se fait traditionnellement une ou deux fois par an.

En ce qui concerne l'apport de phosphore, il est connu de pratiquer une fertilisation par apport d'anhydride phosphorique (P₂O₅), d'acide phosphorique (H₃PO₄), de phosphate monopotassique, de phosphate bipotassique, ou de phosphate tripotassique, à raison d'au plus 100 kilogrammes environ de P₂O₅ apporté par hectare cultivé et par an (100 kg/ha/an), soit 100 unités de fertilisation (UF) par an.

### EXPOSÉ DE L'INVENTION

Un objectif de l'invention est de proposer un procédé de culture de Zoysia tenuifolia qui permette un prélèvement fréquent, sur le site de culture, de plaques de gazon transportables susceptibles d'être transplantées sur un site distinct du site de culture.

Un objectif de l'invention est de proposer un procédé de culture de Zoysia tenuifolia qui soit amélioré et/ou qui remédie, en partie au moins, aux lacunes ou inconvénients des procédés de culture de Zoysia tenuifolia connus.

Selon un aspect de l'invention, il est proposé un procédé de culture de Zoysia tenuifolia dans lequel on met en culture Zoysia tenuifolia dans un substrat de culture dont l'épaisseur est au moins égale à 10 centimètres, en particulier au moins égale à 20 ou 30 centimètres, et dans lequel on procède à un apport répété et intensif de phosphore au moins une fois par mois pendant la période de croissance de Zoysia tenuifolia, généralement, à raison d'au moins 150 ou 200kg/ha/an de P₂O₅.

Selon un autre aspect de l'invention, il est proposé un procédé de culture de Zoysia tenuifolia lequel on met en culture des tiges, stolons, rhizomes, bourgeons, ou méristèmes de Zoysia tenuifolia dans un substrat de culture essentiellement d'origine minérale, qui présente une texture de sol sableux et dont l'épaisseur est au moins égale à 10, 20 ou 30 centimètres, et dans lequel on procède à un apport de phosphore au moins deux ou trois fois par mois pendant la période de croissance de Zoysia tenuifolia, en particulier au moins une fois par semaine environ.

Selon un autre aspect de l'invention, il est proposé un procédé de culture de Zoysia tenuifolia lequel on met en culture Zoysia tenuifolia en pleine terre, le sol de culture comportant au moins 70% (en masse) de particules minérales présentant une granulométrie allant de 0,05 millimètre environ à 2 millimètres environ, et dans lequel on procède à un apport de phosphore au moins cinq fois par an, et de préférence au moins dix ou quinze fois par an pendant la période de croissance végétative de Zoysia tenuifolia, à raison d'au moins 150 ou 200 kg/ha/an de P₂O₅, en particulier à raison d'au moins 300, 400 ou 500 kg/ha/an de P₂O₅.

Le substrat de culture peut avantageusement comporter au moins 80 % (en masse) de particules minérales présentant une granulométrie allant de 0,05 millimètre environ à 2 millimètres environ, en particulier au moins 90 % (en masse) de ces particules minérales.

L'invention a notamment pour résultat une plantation de gazon dans un substrat de culture tel que décrit dans la présente, la plantation comportant une masse végétale de Zoysia tenuifolia qui inclue au moins 50 % (en masse) de rhizomes de Zoysia tenuifolia, en particulier de l'ordre de 70 % à 98 % (en masse) de rhizomes de Zoysia tenuifolia, les rhizomes de Zoysia tenuifolia s'étendant (en moyenne) sur une hauteur (ou épaisseur) du substrat d'au moins 8 centimètres, en particulier sur une épaisseur voisine de 10 à 15 centimètres.

Selon un autre aspect de l'invention, il est proposé un procédé de production de plaques de Zoysia tenuifolia dans lequel on cultive Zoysia tenuifolia comme décrit dans la présente demande, et dans lequel on coupe les rhizomes de Zoysia tenuifolia à une profondeur (sous la surface du substrat) de l'ordre de 1 à 10 centimètres, en particulier à une profondeur d'au moins 2 ou 3 centimètres - et généralement inférieure ou égale à 10 centimètres - sous la surface du substrat.

L'invention a également pour résultat des plaques ou rouleaux de gazon qui comportent une masse végétale de Zoysia tenuifolia qui inclue au moins 50 % (en masse) de rhizomes de Zoysia tenuifolia, en particulier au moins 60 % ou 70 % (en masse) de rhizomes, les rhizomes - pour partie au moins sectionnés - de Zoysia tenuifolia s'étendant en moyenne sur une hauteur/épaisseur au moins égale à 1 centimètre environ, en particulier sur une épaisseur située dans une plage allant de 2 centimètres environ à 4, 6, 8 ou 10 centimètres environ ; l'épaisseur des rhizomes correspond sensiblement à la profondeur de coupe choisie.

L'invention permet d'obtenir une plantation de Zoysia tenuifolia comportant une grande quantité de rhizomes s'étendant sur une hauteur - également dénommée « épaisseur » - de l'ordre de 10 à 20 centimètres au moins, qui est sensiblement uniforme, ce qui facilite des prélèvements successifs de plaques de Zoysia tenuifolia, en particulier au moins deux ou trois prélèvements par année, et la reconstitution accélérée de la couverture herbacée verte de Zoysia tenuifolia après chaque prélèvement, sans nécessiter une replantation.

Il a été en effet constaté que, de façon surprenante, l'application régulière et répétée de phosphore, en particulier d'acide phosphorique, sur les cultures de Zoysia tenuifolia, permet un développement rapide du rhizome en profondeur, en complément du développement superficiel du rhizome et des stolons.

L'invention permet un minimum de 2 à 3 récoltes (par déplaquage) par an sur une même surface de culture, sans replanter Zoysia tenuifolia, notamment lorsque la structure du sol est de type sableux à plus de 90% et présente un pH (pH H₂O) neutre ou inférieur à 7.

L'auto régénération de la couverture verte - ou partie aérienne -, à partir des portions de rhizome restées en place dans le substrat de culture, peut être obtenue en un mois ou un mois et demi, ce qui permet d'intensifier les déplacages successifs la même année.

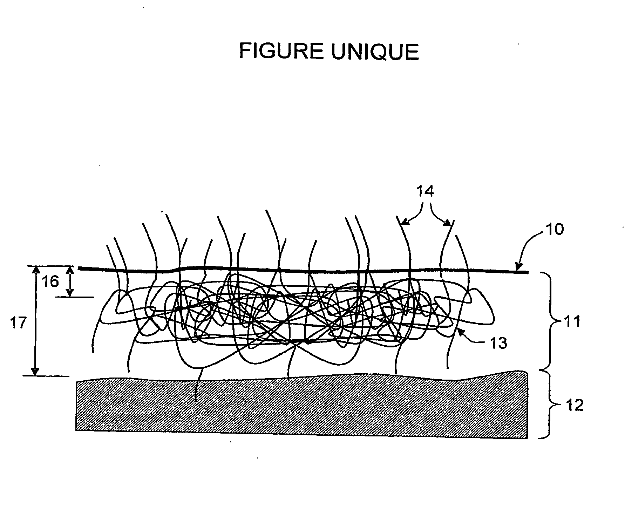

D'autres aspects, caractéristiques, et avantages de l'invention apparaissent dans la description suivante qui illustre, sans aucun caractère limitatif, des modes préférés de réalisation de l'invention, par référence à la figure unique annexée.

La figure unique annexée illustre schématiquement, en vue en coupe par un plan vertical, une plantation de Zoysia tenuifolia conforme à l'invention dans un sol dont la partie superficielle est le substrat de culture.

### DESCRIPTION DETAILLEE DE L'INVENTION

Le développement des rhizomes 13 de Zoysia tenuifolia s'effectue aisément en profondeur dans un sol 11 aéré et filtrant. Le développement du rhizome à privilégier en premier lieu est le développement en profondeur, au dépens du développement en surface, ce qui retarde la première récolte mais permet, au terme d'une période de culture dont la durée varie en fonction de la densité de plantation, d'intensifier les opérations réitérées de déplacages successifs sur la même surface cultivée.

L'invention repose pour partie sur la constatation faite qu'en appliquant le procédé de culture en pleine terre décrit dans le brevet FR2867017, le développement des rhizomes au terme d'une période de culture de 18 mois dans un sol sableux, ne permettait pas l'obtention de plaques de gazon totalement satisfaisantes.

On observait en effet un développement insuffisant des rhizomes, aussi bien en ce qui concerne l'épaisseur de la couche - ou masse - de rhizomes qui était généralement inférieure ou égale à 5 centimètres, qu'en ce qui concerne la densité de rhizomes (teneur en rhizomes de la masse végétale totale).

Il en résultait que d'une part les plaques de gazon obtenues par déplacages successifs ne présentaient pas une cohésion suffisante pour éviter leur détérioration aux cours des manipulations nécessaires à leur conditionnement et à leur mise en oeuvre ultérieure et que, d'autre part, les portions de rhizomes sectionnés par le déplacage et restant en place dans le sol avaient des difficultés à régénérer la couverture verte après le déplacage.

L'invention repose également pour partie sur la constatation faite qu'en apportant accidentellement une quantité de phosphore très supérieure aux normes, on observait un développement rapide des rhizomes, en densité et en profondeur.

Des essais comparatifs ont alors permis de déterminer les apports utiles de phosphore permettant d'obtenir rapidement des rhizomes d'une longueur voisine de 8 à 10 ou 15 centimètres au moins.

Afin de ne pas détruire la structure végétale souterraine ainsi développée, les déplacages sont de préférence réalisés par une coupe des rhizomes à une profondeur 16 de l'ordre de 1 à 10 centimètres, en particulier à une profondeur d'au moins 2 ou 3 centimètres, sous la surface 10 du sol 11, 12.

La reconstitution de la couverture verte 14 après un déplacage est obtenue, généralement à partir du printemps, en un ou deux mois environ lorsque les températures nocturnes sont voisines de - ou supérieures à - 10 à 15°C.

L'apport de phosphore permettant de pérenniser la vie du rhizome peut être réalisé sous la forme d'apport d'acide phosphorique, en pulvérisation foliaire avec l'eau d'arrosage, ou en épandage.

Des apports massifs de phosphore, de préférence d'au minimum 10 à 50 UF (kg/ha) par semaine pendant une durée d'au moins six mois par année, montrent leur pleine efficacité en périodes de jours longs durant lesquelles s'exprime la croissance des parties foliacées chlorophylliennes de Zoysia tenuifolia.

Des arrosages massifs effectués régulièrement, principalement à chaque fertilisation, sont de préférence nocturnes. Des apports d'azote peuvent être effectués en fin de période de culture pour uniformiser la couleur du gazon obtenu.

Des apports complémentaires de potassium peuvent être effectués ; ces apports peuvent être combinés aux apports de phosphore par l'apport de phosphate mono-, bi-, ou tri-potassique.

La culture de Zoysia tenuifolia selon l'invention peut être faite en plein air, sous ombrière, sous frondaison, ou bien sous serre.

Parmi les différents types de texture de sol qui permettent cette régénération, un sol 11, 12 de texture sableuse permet d'optimiser la régénération de la partie aérienne 14 chlorophyllienne, à partir du rhizome maintenu et développé dans le sol.

Cette régénération peut être obtenue également dans des substrats 11 modifiés (reconstitués), dans lesquels l'équivalence d'une texture sableuse est obtenue en utilisant ou en associant différents matériaux ayant une densité et une porosité adaptée. C'est le cas de substrats artificiels associant des matières premières minérales naturelles comme la zéolithe, les roches volcaniques désignées scories ou pouzzolanes, les produits industriels désignés scories, ou des matériaux associant des matières premières minérales issues d'un traitement industriel comme laine de roche, perlite, vermiculite, schistes ou argiles expansés, dans des granulométries adaptées.

La nomenclature des sols naturels selon le triangle des textures (triangle pédologique) définit un sol sableux lorsque le pourcentage cumulé de sable fin et de sable grossier est supérieur à 70%.

Les substrats de culture utilisables pour le procédé de culture selon l'invention comprennent donc les sols naturellement sableux ainsi que les sols reconstitués ayant des caractéristiques de texture équivalentes.

Dans ces substrats de culture, l'invention permet l'établissement en une profondeur inhabituelle du rhizome de Zoysia tenuifolia et permet le développement d'une masse dense de rhizome en épaisseur sensiblement constante sur toute la surface de la culture.

Dans un sol sableux dont la teneur en sable variera entre 70% et 85 % le rhizome pourra s'établir en masse sur une épaisseur d'au moins 10 ou 20 cm.

Dans un sol sableux dont la teneur en sable dépassera 85% et atteindra une teneur de l'ordre de 90% et pour un pH H₂O qui peut évoluer entre 4,5 et 8,5, de préférence entre 5,5 et 7,5, le développement du rhizome peut atteindre une épaisseur (hauteur) qui peut varier entre 10 cm environ et 30 cm environ.

Lorsque le sol d'une parcelle à cultiver contient moins de 70% de sable, on peut procéder à un ajout superficiel de sable ou d'un des matériaux mentionnés ci avant (scories, etc), afin d'obtenir un sol aéré et filtrant, propice au développement rapide et durable des rhizomes de Zoysia tenuifolia.

Selon les règles et pratiques agronomiques, une fertilisation phosphorique de type P₂O₅ (anhydride phosphorique) pour une culture à haut rendement conduite en sol pauvre, comme c'est le cas d'un sol sableux - contenant plus de 70% de sable -, est considérée comme élevée lorsqu'elle atteint 80 UF à 100 UF d'apport par an. Ce dosage fractionné sur 8 mois de culture intensive correspond à un apport de 10 UF à 12,5 UF par mois.

Contrairement à ces règles et usages, des apports fractionnés excessivement élevés de P₂O₅ permettent, conformément à l'invention, l'obtention rapide de nombreux rhizomes longs.

Des apports hebdomadaires de phosphore bien supérieurs aux normes, en solution liquide, en formulation soluble ou toute formulation immédiatement ou facilement assimilable, permettent le développement extraordinairement rapide et dense du rhizome et de la plante dans des sols contenant un pourcentage élevé de sable.

A cet effet, les apports de phosphore sont de préférence de l'ordre de 10 UF à 12 UF ou 15 UF par semaine, soit au moins trois ou quatre fois plus qu'une dose traditionnellement considérée comme élevée, en particulier pour un sol sableux dont la teneur en sable est située dans une plage allant de 70% environ à 85% environ.

Les apports de phosphore peuvent être de l'ordre de 10 UF à 50 UF par semaine en sol sableux contenant de l'ordre de 85% de sable, 90% de sable, ou plus.

Ces opérations de fertilisation phosphorique sont reconduites chaque année durant les périodes d'exploitation des productions.

Les apports de phosphore fréquents et fractionnés s'inscrivent dans une logique écologique et environnementale pour n'apporter à la plante que les dosages nutritifs qu'elle peut assimiler.

Sans sortir du cadre de l'invention telle que définie par les revendications annexées, différentes variantes de réalisation de l'invention peuvent être prévues, notamment en cultivant Zoysia tenuifolia mélangée à d'autres graminées.

## Revendications

1. Procédé de culture de Zoysia tenuifolia **caractérisé en ce que** l'on met en culture Zoysia tenuifolia dans un substrat (11) de culture dont l'épaisseur (17) est au moins égale à dix centimètres, et **en ce que** l'on procède à un apport de phosphore au moins une fois par mois pendant la période de croissance de Zoysia tenuifolia, à raison d'au moins 150 ou 200 kg/ha/an de P₂O₅.

2. Procédé selon la revendication 1 dans lequel on met en culture des tiges, stolons, rhizomes, bourgeons, ou méristemes de Zoysia tenuifolia dans le substrat de culture qui est essentiellement d'origine minérale et présente une texture de sol sableux, et dans lequel on procède à un apport de phosphore au moins deux ou trois fois par mois pendant la période de croissance de Zoysia tenuifolia.

3. Procédé selon la revendication 1 ou 2 dans lequel on procède à un apport de phosphore au moins une fois par semaine environ.

4. Procédé selon l'une quelconque des revendications 1 à 3, dans lequel on procède à un apport de phosphore au moins cinq, dix, ou quinze fois par an.

5. Procédé selon l'une quelconque des revendications 1 à 4, dans lequel on procède à un apport de phosphore à raison d'au moins 300, 400 ou 500 kg/ha/an de P₂O₅.

6. Procédé selon l'une quelconque des revendications 1 à 5, dans lequel le substrat de culture comporte au moins 70 % - en masse - de particules minérales présentant une granulométrie allant de 0,05 millimètre environ à 2 millimètres environ.

7. Procédé selon l'une quelconque des revendications 1 à 6 dans lequel le substrat de culture comporte au moins 80 % - en masse - de particules minérales présentant une granulométrie allant de 0,05 millimètre environ à 2 millimètres environ, en particulier au moins 90 % - en masse - de ces particules minérales.

8. Procédé selon l'une quelconque des revendications 6 ou 7 dans lequel les particules minérales sont choisies parmi le sable, la zéolithe, les scories, la laine de roche, le schiste expansé, l'argile expansée, ou un mélange d'au moins deux de ces matériaux.

9. Procédé selon l'une quelconque des revendications 1 à 8 dans lequel on apporte le phosphore sous forme d'une solution de P₂O₅.

10. Procédé selon l'une quelconque des revendications 1 à 9 dans lequel on apporte le phosphore sous forme d'une solution de H₃PO₄.

11. Procédé selon l'une quelconque des revendications 1 à 10 dans lequel on apporte le phosphore en pulvérisation foliaire avec de l'eau d'arrosage, ou en épandage.

12. Procédé selon l'une quelconque des revendications 1 à 11 dans lequel on cultive Zoysia tenuifolia en pleine terre.

13. Procédé selon l'une quelconque des revendications 1 à 12 dans lequel on ajuste le pH du substrat de culture à une valeur située dans une plage allant de 5,5 environ à 7,5 environ.

14. Procédé selon l'une quelconque des revendications 1 à 13 dans lequel la plantation en résultant comporte une masse végétale de Zoysia tenuifolia qui inclue de l'ordre de 70% à 98% (en masse) de rhizomes de Zoysia tenuifolia, les rhizomes de Zoysia tenuifolia s'étendant sur une hauteur (ou épaisseur) du substrat d'au moins 8 centimètres.

15. Procédé d'obtention de plaques ou rouleaux de gazon transportables dans lequel on cultive Zoysia tenuifolia conformément à un procédé selon l'une quelconque des revendications 1 à 14 et dans lequel on coupe les rhizomes de Zoysia tenuifolia à une profondeur (16) de l'ordre de 1 à 10 centimètre, en particulier à une profondeur d'au moins 2 ou 3 centimètres.

## Patentansprüche

1. Zuchtverfahren für Zoysia Tenuifolia, **dadurch gekennzeichnet, dass** eine Zucht von Zoysia Tenuifolia in einem Zuchtsubstrat (11) angelegt wird, dessen Dicke (17) wenigstens gleich zehn Zentimeter ist und dass während der Wachstumsperiode von Zoysia Tenuifolia ein Eintrag von Phosphor wenigstens ein Mal pro Monat in einer Menge an P₂O₅ von wenigstens 150 oder 200 kg / ha / Jahr vorgenommen wird.

2. Verfahren gemäß Anspruch 1, bei dem Stängel, Ausläufer, Wurzelstöcke, Knospen oder Meristeme von Zoysia Tenuifolia in das Zuchtsubstrat zur Zucht angelegt werden, das im Wesentlichen mineralischen Ursprungs ist und eine sandige Bodenstruktur aufweist und in dem während der Wachstumsperiode von Zoysia Tenuifolia ein Phosphoreintrag wenigstens zwei oder drei Mal pro Monat vorgenommen wird.

3. Verfahren gemäß Anspruch 1 oder 2, bei dem wenigstens ungefähr ein Mal pro Woche ein Phosphoreintrag vorgenommen wird.

4. Verfahren gemäß Anspruch 1 bis 3, bei dem wenigstens fünf, zehn oder fünfzehn Mal pro Jahr ein Phosphoreintrag vorgenommen wird'.

5. Verfahren gemäß Anspruch 1 bis 4, bei dem ein Phosphoreintrag in einer Menge an P₂O₅ von wenigstens 300, 400 oder 500 kg / ha / Jahr vorgenommen wird.

6. Verfahren gemäß Anspruch 1 bis 5, bei dem das Zuchtsubstrat wenigstens 70 % - in der Masse - mineralische Partikel umfasst, die eine von rund 0,05 Millimetern bis rund 2 Millimetern reichende Korngröße aufweisen.

7. Verfahren gemäß Anspruch 1 bis 6, bei dem das Zuchtsubstrat wenigstens 80 % - in der Masse - mineralische Partikel umfasst, die eine von rund 0,05 Millimetern bis rund 2 Millimetern, insbesondere wenigstens 90 % - in der Masse - dieser mineralischen Partikel reichende Korngröße aufweisen.

8. Verfahren gemäß Anspruch 6 oder 7, bei dem die mineralischen Partikel aus Sand, Zeolith, Schlacken, Steinwolle, expandiertem Schiefer, expandiertem Ton oder einer Mischung aus wenigstens zwei dieser Materialien ausgewählt sind.

9. Verfahren gemäß Anspruch 1 bis 8, bei dem der Phosphor in Form einer Lösung aus P₂O₅ eingebracht wird.

10. Verfahren gemäß Anspruch 1 bis 9, bei dem der Phosphor in Form einer Lösung aus H₃PO₄ eingebracht wird.

11. Verfahren gemäß Anspruch 1 bis 10, bei dem der Phosphor mit dem Gießwasser auf die Blätter versprüht oder in Streuung eingebracht wird.

12. Verfahren gemäß Anspruch 1 bis 11, bei dem Zoysia Tenuifolia direkt in der Erde gezüchtet wird.

13. Verfahren gemäß Anspruch 1 bis 12, bei dem der pH-Wert des Zuchtsubstrats auf einen sich in einem von rund 5,5 bis rund 7,5 reichenden Bereich befindenden Wert angepasst wird.

14. Verfahren gemäß Anspruch 1 bis 13, bei dem die daraus resultierende Bepflanzung eine pflanzliche Masse an Zoysia Tenuifolia umfasst, die in einer Größenordnung von 70 % bis 98 % (in der Masse) Wurzelstöcke von Zoysia Tenuifolia einschließt, wobei sich die Wurzelstöcke von Zoysia Tenuifolia über eine Höhe (oder Dicke) des Substrats von wenigstens 8 Zentimetern erstrecken.

15. Verfahren zum Erhalt von transportfähigen Rasenplatten oder -rollen, bei dem Zoysia Tenuifolia gemäß einem Verfahren nach Anspruch 1 bis 14 gezüchtet wird und bei dem die Wurzelstöcke von Zoysia Tenuifolia in einer Tiefe (16) in einer Größenordnung von 1 bis 10 Zentimetern, insbesondere in einer Tiefe von wenigstens 2 oder 3 Zentimetern geschnitten werden.

## Claims

1. A method for cultivating Zoysia tenuifolia, **characterized in that** Zoysia tenuifolia is grown in a cultivation substrate (11), the thickness (17) of which is at least equal to ten centimeters, and **in that** phosphorus is added at least once a month during the growth period of Zoysia tenuifolia, in quantities of at least 150 or 200kg/ha/year of P₂O₅.

2. A method according to claim 1, wherein stems, stolons, rhizomes, buds, or meristems of Zoysia tenuifolia are grown in the cultivation substrate which has substantially a mineral origin and has a texture of a sandy soil, and wherein phosphorus is added at least two or three times a month during the growth period of Zoysia tenuifolia.

3. A method according to claim 1 or 2, wherein phosphorus is added at least about once a week.

4. A method according to any one of claims 1 to 3, wherein phosphorus is added at least five, ten, or fifteen times a year.

5. A method according to any one of claims 1 to 4, wherein phosphorus is added in quantities of at least 300, 400 or 500kg/ha/year of P₂O₅.

6. A method according to any one of claims 1 to 5, wherein the cultivation substrate comprises at least 70% - by mass - of mineral particles having a particle size ranging from about 0.05 millimetres to about 2 millimetres.

7. A method according to any one of claims 1 to 6, wherein the cultivation substrate comprises at least 80% - by mass - of mineral particles having a particle size ranging from about 0.05 millimetres to about 2 millimetres, more particularly at least 90% - by mass - of such mineral particles.

8. A method according to any one of claims 6 or 7, wherein the mineral particles are selected from sand, zeolite, slag, rock wool, expanded shale, expanded clay, or a mixture of at least two of such materials.

9. A method according to any one of claims 1 to 8, wherein phosphorus is added as a solution of P₂O₅.

10. A method according to any one of claims 1 to 9, wherein phosphorus is added as a solution of H₃PO₄.

11. A method according to any one of claims 1 to 10, wherein phosphorus is added by foliar spraying with irrigation water, or by spreading.

12. A method according to any one of claims 1 to 11, wherein Zoysia tenuifolia is grown in the open ground.

13. A method according to any one of claims 1 to 12, wherein the pH of the cultivation substrate is adjusted to a value within a range from about 5.5 to about 7.5.

14. A method according to any one of claims 1 to 13, wherein the resulting plantation includes a phytomass of Zoysia tenuifolia comprising about 70% to 98% - by mass - of rhizomes of Zoysia tenuifolia, with the rhizomes of Zoysia tenuifolia extending over a height (or thickness) of the substrate of at least 8 centimeters.

15. A method for obtaining transportable patches or rolls of grass wherein Zoysia tenuifolia is cultivated in compliance with a method according to any one of claims 1 to 14, and wherein the rhizomes of Zoysia tenuifolia are cut at a depth (16) of the order of 1 to 10 centimeters, more particularly at a depth of at least 2 or 3 centimeters.
